(19) **Europäisches Patentamt**
**European Patent Office**
**Office européen des brevets**

(11) **EP 3 495 245 B1**

(12) **EUROPEAN PATENT SPECIFICATION**

(45) Date of publication and mention
of the grant of the patent:
**27.05.2020 Bulletin 2020/22**

(51) Int Cl.:
**B62D 15/02** *(2006.01)*  **B62D 1/28** *(2006.01)*

(21) Application number: **18208875.7**

(22) Date of filing: **28.11.2018**

(54) **VEHICLE STEERING SYSTEM**

FAHRZEUGLENKSYSTEM

SYSTÈME DE DIRECTION DE VÉHICULE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **29.11.2017 JP 2017229229**

(43) Date of publication of application:
**12.06.2019 Bulletin 2019/24**

(73) Proprietor: **JTEKT CORPORATION
Osaka 542-8502 (JP)**

(72) Inventors:
• **MOREILLON, Maxime
Osaka-shi, Osaka 542-8502 (JP)**

• **FUCHS, Robert
Osaka-shi, Osaka 542-8502 (JP)**
• **TAMURA, Tsutomu
Osaka-shi, Osaka 542-8502 (JP)**

(74) Representative: **Winter, Brandl, Fürniss, Hübner,
Röss, Kaiser, Polte - Partnerschaft mbB
Patent- und Rechtsanwaltskanzlei
Alois-Steinecker-Strasse 22
85354 Freising (DE)**

(56) References cited:
**EP-A1- 3 266 678    JP-A- 2004 256 076
US-A1- 2016 207 536    US-B1- 9 592 848**

**Description**

BACKGROUND OF THE INVENTION

1. Field of the Invention

The invention relates generally to vehicle steering systems. More particularly, the invention relates to a vehicle steering system that effects automatic steering control for automatic steering angle control and manual steering control (i.e., assist control) for manual steering angle control with a shared electric motor.

2. Description of the Related Art

Japanese Patent Application Publication No. 2004-256076 (JP 2004-256076 A) discloses a vehicle steering system that effects automatic steering control for automatic steering angle control and manual steering control for manual steering angle control with a shared actuator (i.e., a shared electric motor). In JP 2004-256076 A, a steering torque to be applied to a steering shaft from the actuator (which will hereinafter be referred to as a "target actuator torque Tt") is represented by Eq. (a):

$$Tt = Kasst{\cdot}Tasst + Kauto{\cdot}Tauto \qquad ... (a)$$

In Eq. (a), Tasst denotes a target assist torque, Tauto denotes a target steering torque for the automatic steering control (which will hereinafter be referred to as a "target automatic steering torque"), and Kasst and Kauto each denote a weighting factor. The actuator is controlled such that the actuator produces a torque corresponding to the target actuator torque Tt.
During the manual steering control, Kauto is 0, so that Tt = Kasst·Tasst. During the manual steering control, the factor Kasst is set at 1, so that Tt = Tasst. The automatic steering control involves calculating the target actuator torque Tt in accordance with Eq. (a). When no steering operation is performed by a driver during the automatic steering control, the steering torque is 0 and thus the target assist torque Tasst is 0 except at the start and end of the automatic steering control. During the automatic steering control, the factor Kauto is set at 1, so that Tt = Tauto when no steering operation is performed by the driver during the automatic steering control.
In JP 2004-256076 A, detecting a steering intervention during the automatic steering control starts transition control to make a transition from the automatic steering control to the manual steering control. The transition control involves reducing the factor Kauto by a predetermined value K1 and increasing the factor Kasst by a predetermined value K2 each time a predetermined period of time elapses. When the factor Kauto falls below 0, the factor Kauto is fixed at 0. When the factor Kasst exceeds 1, the factor Kasst is fixed at 1. The target actuator torque Tt is calculated using the updated factors Kauto and Kasst. The actuator is controlled such that the actuator produces a torque corresponding to the target actuator torque Tt calculated. Thus, the transition control is terminated when the factor Kauto is 0 and the factor Kasst is 1.
During the transition control described in JP 2004-256076 A, the factor Kauto gradually decreases with respect to time, and the factor Kasst gradually increases with respect to time. The transition control is terminated when the factor Kauto is 0 and the factor Kasst is 1. This suppresses variations in the target actuator torque Tt and thus reduces a sense of incongruity felt by the driver in deactivating the automatic steering control. In JP 2004-256076 A, however, the time between the start and end of the transition control (which will hereinafter be referred to as a "transition control time") is kept constant at all times. The driver is thus unable to change the transition control time by performing a steering operation. This may make it impossible to quickly perform switching from the automatic steering control to the manual steering control in the event of an emergency, for example.
WO 2016/199839 discloses the preamble of claim 1.

SUMMARY OF THE INVENTION

An object of the invention is to provide a vehicle steering system that is able to change a transition control time in response to a steering operation performed by a driver.
An aspect of the invention provides a vehicle steering system including an electric motor, a setter, an estimator, an automatic steering controller, a manual steering controller, and an automatic steering deactivator. The electric motor provides a steering force to a steering operation mechanism of a vehicle. The setter sets an angle control target torque to cause an angle difference between a target steering angle and an actual steering angle to approach zero. The estimator estimates a road load torque received from a road by an object to be driven by the electric motor. The automatic steering controller sets a target automatic steering torque in accordance with the angle control target torque set by the setter and the road load torque estimated by the estimator. The automatic steering controller controls the electric motor in accordance with the target automatic steering torque so as to exercise automatic steering control. The manual steering controller controls the electric motor in accordance with a target assist torque responsive to a steering torque so as to exercise manual steering control. The automatic steering deactivator makes switching from the automatic steering control to the manual steering control in accordance with a steering operation performed by a driver during the automatic steering control exercised by the automatic steering controller. The automatic steering deactivator includes a transition controller. The transition controller exercises transition control when a transition control start requirement is satisfied. The transition control start requirement includes at least a requirement that an absolute value of the steering torque be equal to or greater than a first predetermined value. The transition controller includes a first controller, a second controller, and a third controller. At a time when the transition control start requirement is satisfied, the first controller saves the angle control target torque set by the setter. The angle control target torque is saved in the form of a transition control start angle control target torque. The second controller calculates a transition control target automatic steering torque in accordance with the transition control start angle control target torque and the road load torque estimated by the estimator. The second controller assigns weights to the transition control target automatic steering torque and the target assist torque using an absolute value of a value responsive to the angle difference so as to calculate a target motor torque. The second controller controls the electric motor in accordance with the target motor torque. When the absolute value of the value responsive to the angle difference is equal to or greater than a second predetermined value, the third controller terminates the transition control so as to make switching from the automatic steering control to the manual steering control.

BRIEF DESCRIPTION OF THE DRAWINGS

The foregoing and further features and advantages of the invention will become apparent from the following description of example embodiments with reference to the accompanying drawings, wherein like numerals are used to represent like elements and wherein:

FIG. 1 is a diagram schematically illustrating an electric power steering system according to an embodiment of the invention;
FIG. 2 is a block diagram illustrating an electrical configuration of a motor control ECU;
FIG. 3 is a graph illustrating an example of setting a target assist torque Tm, mc for a steering torque Td;
FIG. 4 is a block diagram of an angle controller;
FIG. 5 is a block diagram of a road load estimator;
FIG. 6 is a schematic diagram illustrating a configuration example of a physical model of the electric power steering system;
FIG. 7 is a block diagram of a disturbance torque estimator;
FIG. 8A is a flowchart illustrating exemplary operations to be performed by an automatic steering deactivating controller during an automatic steering mode;
FIG. 8B is a flowchart illustrating exemplary operations to be performed by the automatic steering deactivating controller during the automatic steering mode; and
FIG. 9 is a graph illustrating return control.

DETAILED DESCRIPTION OF EMBODIMENTS

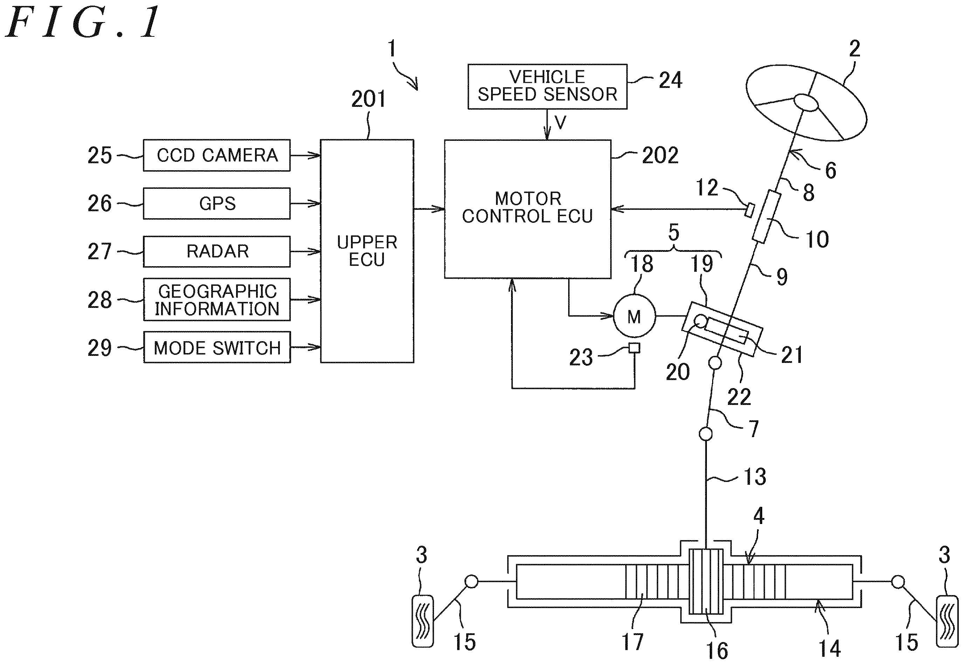

Embodiments of the invention will be described in detail below with reference to the accompanying drawings. FIG. 1 is a diagram schematically illustrating an electric power steering system (EPS) 1 according to an embodiment of the invention. The electric power steering system 1 is a column type electric power steering system in which an electric motor and a speed reducer are disposed on a column.

The electric power steering system 1 includes a steering wheel 2, a steering operation mechanism 4, and a steering assist mechanism 5. The steering wheel 2 is a steering member to steer a vehicle. The steering operation mechanism 4 steers steered wheels 3 in response to rotation of the steering wheel 2. The steering assist mechanism 5 assists a driver in steering the vehicle. The steering wheel 2 and the steering operation mechanism 4 are mechanically coupled to each other through a steering shaft 6 and an intermediate shaft 7.

The steering shaft 6 includes: an input shaft 8 coupled to the steering wheel 2; and an output shaft 9 coupled to the intermediate shaft 7. The input shaft 8 and the output shaft 9 are coupled to each other through a torsion bar 10 such that the input shaft 8 and the output shaft 9 are rotatable relative to each other. A torque sensor 12 is disposed adjacent to the torsion bar 10. In accordance with the amount of relative rotational displacement between the input shaft 8 and the output shaft 9, the torque sensor 12 detects a steering torque (torsion bar torque) Td applied to the steering wheel 2. In this embodiment, the steering torque Td detected by the torque sensor 12 includes a torque to steer the vehicle to the left and a torque to steer the vehicle to the right. The torque sensor 12 outputs a positive value upon detecting the torque to steer the vehicle to the left. The torque sensor 12 outputs a negative value upon detecting the torque to steer the vehicle to the right. The greater the absolute value of the positive or negative value, the greater the magnitude of the steering torque Td.

The steering operation mechanism 4 is a rack and pinion mechanism including a pinion shaft 13 and a rack shaft 14 that serves as a steering operation shaft. Each of the steered wheels 3 is coupled to an associated one of the ends of the rack shaft 14 through a tie rod 15 and a steering knuckle arm (not illustrated). The pinion shaft 13 is coupled to the intermediate shaft 7. The pinion shaft 13 rotates in response to a steering operation performed on the steering wheel 2. A pinion 16 is coupled to an end of the pinion shaft 13.

The rack shaft 14 extends linearly in the right-left direction of the vehicle. An axially intermediate portion of the rack shaft 14 is provided with a rack 17 in mesh with the pinion 16. The pinion 16 and the rack 17 convert rotation of the pinion shaft 13 into axial movement of the rack shaft 14. The axial movement of the rack shaft 14 steers the steered wheels 3.

A steering operation performed on the steering wheel 2 rotates the steering wheel 2. The rotation of the steering wheel 2 is transmitted to the pinion shaft 13 through the steering shaft 6 and the intermediate shaft 7 so as to rotate the pinion shaft 13. The rotation of the pinion shaft 13 is converted into axial movement of the rack shaft 14 through the pinion 16 and the rack 17. The axial movement of the rack shaft 14 steers the steered wheels 3. The steering assist mechanism 5 includes an electric motor 18 and a speed reducer 19. The electric motor 18 produces a steering assist force (i.e., an assist torque). The speed reducer 19 amplifies a torque output from the electric motor 18 and transmits the torque to the steering operation mechanism 4. The speed reducer 19 is a worm gear mechanism including a worm gear 20 and a worm wheel 21 in mesh with the worm gear 20. The speed reducer 19 is housed in a gear housing 22 serving as a transmission mechanism housing.

The worm gear 20 is rotated by the electric motor 18. The worm wheel 21 is coupled to the output shaft 9 such that the worm wheel 21 is rotatable together with the output shaft 9. The worm wheel 21 is rotated by the worm gear 20. The rotation of the worm gear 20 caused by the electric motor 18 rotates the worm wheel 21. The rotation of the worm wheel 21 applies a motor torque to the steering shaft 6 and rotates the steering shaft 6 (i.e., the output shaft 9). The rotation of the steering shaft 6 is transmitted to the pinion shaft 13 through the intermediate shaft 7 so as to rotate the pinion shaft 13. The rotation of the pinion shaft 13 is converted into axial movement of the rack shaft 14. The axial movement of the rack shaft 14 steers the steered wheels 3. In other words, rotating the worm gear 20 by the electric motor 18 makes it possible to assist the driver in steering the vehicle and steer the steered wheels 3 by the electric motor 18. The electric motor 18 is provided with a rotation angle sensor 23 to detect the rotation angle of a rotor of the electric motor 18.

Torques to be applied to the output shaft 9 (i.e., an object to be driven by the electric motor 18) include a motor torque produced by the electric motor 18, and a disturbance torque Tlc other than the motor torque. The disturbance torque Tlc includes the steering torque Td and a road load torque (road reaction torque) Trl. The steering torque Td is a torque applied to the output shaft 9 (i.e., the object to be driven by the electric motor 18) from the steering wheel 2 in accordance with, for example, a force applied to the steering wheel 2 by the driver and a force resulting from steering inertia.

The road load torque Trl is a torque applied to the output shaft 9 (i.e., the object to be driven by the electric motor 18) from a road through the steered wheels 3 and the rack shaft 14 in accordance with, for example, a self-aligning torque produced by tire(s), a force produced by a suspension or wheel alignment, and/or a frictional force on the rack and pinion mechanism. The road load torque Trl transmitted to the output shaft 9 from a road is divided by a reduction ratio N of the speed reducer 19 so as to provide a road load torque Trlc. The road load torque Trlc is represented by the following equation: Trlc = Trl/N.

The vehicle is equipped with: a vehicle speed sensor 24 to detect a vehicle speed V; a charge-coupled device (CCD) camera 25 to capture an image of a road in front of the vehicle traveling forward; a global positioning system (GPS) 26 to detect the position of the vehicle; and a radar 27 to detect a road shape and/or an obstacle. The vehicle is further equipped with: a geographic information memory 28 storing geographic information; and an automatic steering mode switch 29 to activate and deactivate an automatic steering mode.

The CCD camera 25, the GPS 26, the radar 27, the geographic information memory 28, and the automatic steering mode switch 29 are connected to an upper electronic control unit (ECU) 201. The upper ECU 201 exercises automatic assist control and automatic driving control. In accordance with the information obtained by the CCD camera 25, the GPS 26, and the radar 27 and the geographic information stored in the geographic information memory 28, the upper ECU 201 carries out operations, such as surrounding environment identification, vehicle position estimation, and route planning, so as to make decisions on steering and a control target value for a driving actuator. The upper ECU 201 provides an instruction for activation and deactivation of the automatic steering mode in accordance with an input signal from the automatic steering mode switch 29.

In this embodiment, the upper ECU 201 sets a target steering angle θcmda for automatic steering, and generates a mode changing signal (i.e., an automatic steering mode activating signal or an automatic steering mode deactivating signal) responsive to an operation performed on the automatic steering mode switch 29. As used herein, the term "automatic steering control" refers to, for example, "lane keep" control to cause the vehicle to travel along a target path. The lane keep control is a kind of driving assist control. The target steering angle θcmda is a target value for a steering angle to cause the vehicle to automatically travel along a target path. The process of setting the target steering angle θcmda is well known, and thus detailed description thereof will be omitted. As used herein, the term "steering angle" refers to a rotation angle of the output shaft 9.

The target steering angle θcmda set by the upper ECU 201 and the mode changing signal generated by the upper ECU 201 are provided to a motor control electronic control unit (ECU) 202 through a vehicle-mounted network. The motor control ECU 202 receives the steering torque Td detected by the torque sensor 12, a signal output from the rotation angle sensor 23, and the vehicle speed V detected by the vehicle speed sensor 24. In accordance with the signals received and the information provided from the upper ECU 201, the motor control ECU 202 controls the electric motor 18.

Upon receiving the automatic steering mode activating signal from the upper ECU 201, the motor control ECU 202 controls the electric motor 18 in an automatic control mode that involves the automatic steering control. Upon receiving the automatic steering mode deactivating signal from the upper ECU 201, the motor control ECU 202 deactivates the automatic steering control so as to control the electric motor 18 in a manual steering mode (i.e., an assist control mode) that involves manual steering control (i.e., assist control). As used herein, the term "manual steering mode" refers to a control mode that involves causing the electric motor 18 to produce a steering assist force (i.e., an assist torque) to assist the driver in steering the vehicle in accordance with the steering torque Td detected by the torque sensor 12 and the vehicle speed V detected by the vehicle speed sensor 24.

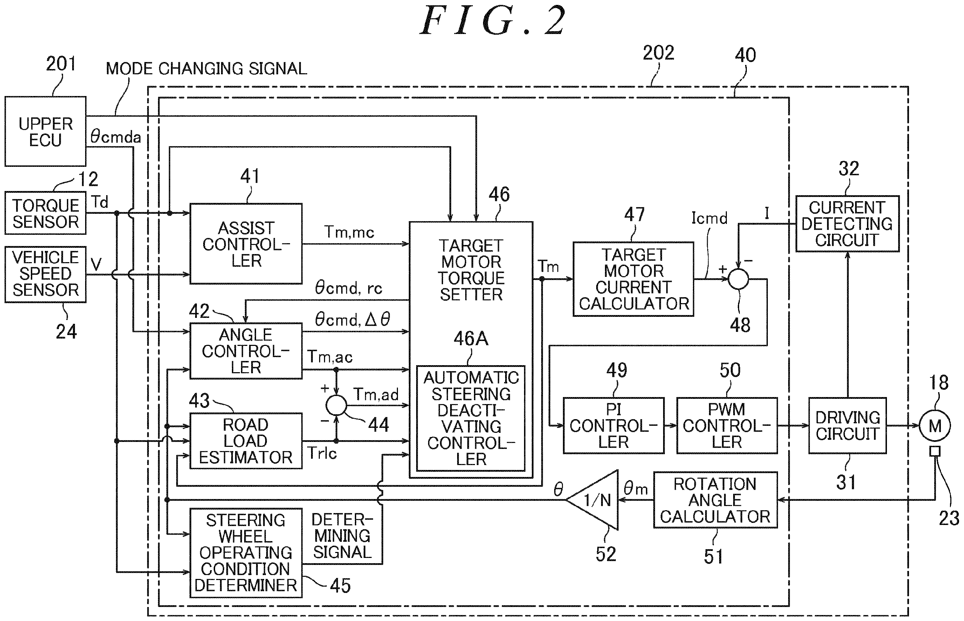

In addition to changing the control mode in accordance with the mode changing signal from the upper ECU 201, the motor control ECU 202 includes the function of changing the control mode from the automatic steering mode to the manual steering mode in the event of an intervening operation resulting from a steering operation performed by the driver during the automatic steering mode. This function may be referred to as an "override function". FIG. 2 is a block diagram illustrating an electrical configuration of the motor control ECU 202.

The motor control ECU 202 includes a microcomputer 40, a driving circuit (inverter circuit) 31, and a current detecting circuit 32. The driving circuit 31 is controlled by the microcomputer 40 so as to supply power to the electric motor 18. The current detecting circuit 32 detects a current flowing through the electric motor 18. The current flowing through the electric motor 18 will hereinafter be referred to as a "motor current I". The microcomputer 40 includes a central processing unit (CPU) and memories, such as a read-only memory (ROM), a random-access memory (RAM), and a nonvolatile memory. The microcomputer 40 executes a predetermined program and thus functions as a plurality of functional processing units. The functional processing units include an assist controller 41, an angle controller 42, a road load estimator 43, a torque subtracter 44, a steering wheel operating condition determiner 45, a target motor torque setter 46, a target motor current calculator 47, a current difference calculator 48, a PI controller 49, a pulse width modulation (PWM) controller 50, a rotation angle calculator 51, and a reduction ratio divider 52.

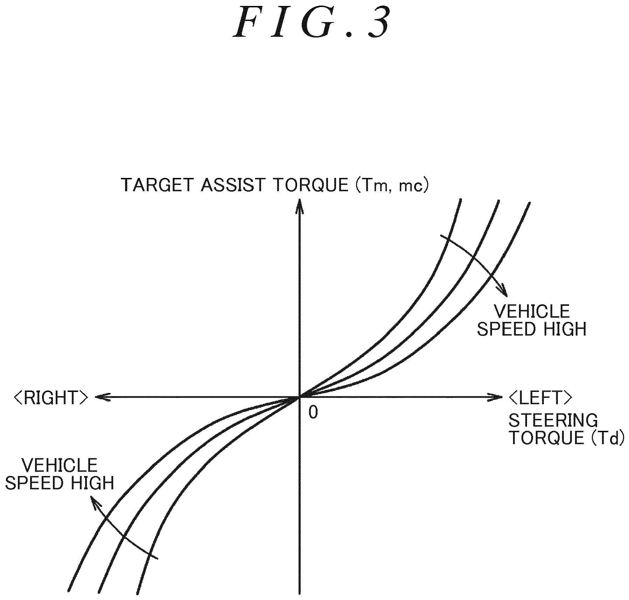

The rotation angle calculator 51 calculates a rotor rotation angle θm of the electric motor 18 in accordance with a signal output from the rotation angle sensor 23. The reduction ratio divider 52 divides the rotor rotation angle θm, calculated by the rotation angle calculator 51, by the reduction ratio N. The reduction ratio divider 52 thus converts the rotor rotation angle θm into a rotation angle (actual steering angle) θ of the output shaft 9. The assist controller 41 sets a target assist torque Tm, mc that is an assist torque target value (i.e., a motor torque target value during the manual steering mode). The assist controller 41 sets the target assist torque Tm, mc in accordance with the steering torque Td detected by the torque sensor 12 and the vehicle speed V detected by the vehicle speed sensor 24. FIG. 3 illustrates an example of setting the target assist torque Tm, mc for the steering torque Td. In the example illustrated in FIG. 3, the steering torque Td assumes a positive value when the steering torque Td is a torque to steer the vehicle to the left, and assumes a negative value when the steering torque Td is a torque to steer the vehicle to the right. The target assist torque Tm, mc assumes a positive value when the electric motor 18 is required to produce a steering assist force to steer the vehicle to the left, and assumes a negative value when the electric motor 18 is required to produce a steering assist force to steer the vehicle to the right.

The target assist torque Tm, mc assumes a positive value when the steering torque Td assumes a positive value, and assumes a negative value when the steering torque Td assumes a negative value. The target assist torque Tm, mc is set such that the absolute value of the target assist torque Tm, mc increases as the absolute value of the steering torque Td increases. The target assist torque Tm, mc is set such that the absolute value of the target assist torque Tm, mc decreases as the vehicle speed V detected by the vehicle speed sensor 24 increases.

The angle controller 42 sets an angle control target torque Tm, ac necessary for angle control (i.e., steering angle control) in accordance with the target steering angle θcmda provided from the upper ECU 201 and the actual steering angle θ calculated by the reduction ratio divider 52. The angle controller 42 will be described in more detail below. The road load estimator 43 estimates the road load torque Trlc in accordance with the steering torque Td detected by the torque sensor 12, the actual steering angle θ calculated by the reduction ratio divider 52, and a target motor torque Tm set by the target motor torque setter 46. The road load estimator 43 will be described in more detail below.

The torque subtracter 44 subtracts the road load torque Trlc, estimated by the road load estimator 43, from the angle control target torque Tm, ac set by the angle controller 42. The torque subtracter 44 thus calculates a target automatic steering torque Tm, ad. The target automatic steering torque Tm, ad is a motor torque target value during the automatic steering mode. In accordance with the steering torque Td detected by the torque sensor 12 and the actual steering angle θ calculated by the reduction ratio divider 52, the steering wheel operating condition determiner 45 determines whether a steering wheel operating condition is a "hands-on" condition in which the driver is gripping the steering wheel 2 or a "hands-off" condition in which the driver is not gripping the steering wheel 2. The steering wheel operating condition determiner 45 outputs a hands-on/hands-off determining signal indicative of the result of the determination made by the steering wheel operating condition determiner 45. In one example, the steering wheel operating condition determiner disclosed in Japanese Patent Application Publication No. 2017-114324 (JP 2017-114324 A) may be used as the steering wheel operating condition determiner 45. Any other known device that is able to determine whether the steering wheel operating condition is the hands-on condition or the hands-off condition may be used as the steering wheel operating condition determiner 45.

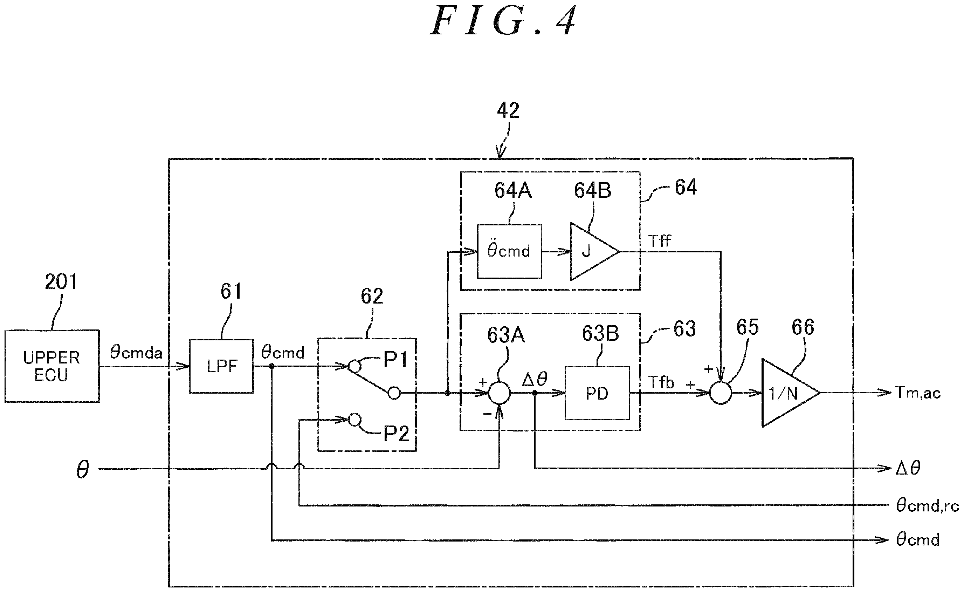

The target motor torque setter (mode changing controller) 46 receives: the target assist torque Tm, mc set by the assist controller 41; the angle control target torque Tm, ac set by the angle controller 42; a target steering angle θcmd (see FIG. 4) calculated by the angle controller 42; and an angle difference Δθ (see FIG. 4) calculated by the angle controller 42. The target motor torque setter 46 receives: the road load torque Trlc estimated by the road load estimator 43; the target automatic steering torque Tm, ad calculated by the torque subtracter 44; the hands-on/hands-off determining signal output from the steering wheel operating condition determiner 45; the automatic steering mode activating signal or the automatic steering mode deactivating signal output from the upper ECU 201; and the steering torque Td output from the torque sensor 12. In accordance with the torques and signals received, the target motor torque setter 46 sets the target motor torque Tm. The target motor torque setter 46 will be described in more detail below.

The target motor current calculator 47 divides the target motor torque Tm, set by the target motor torque setter 46, by a torque constant Kt of the electric motor 18. The target motor current calculator 47 thus calculates a target motor current Icmd. The current difference calculator 48 calculates a current difference ΔI between the target motor current Icmd calculated by the target motor current calculator 47 and the motor current I detected by the current detecting circuit 32. The current difference ΔI is represented by the following equation: ΔI = Icmd - I.

The PI controller 49 performs a PI calculation (i.e., a proportional-plus-integral calculation) on the current difference ΔI calculated by the current difference calculator 48. The PI controller 49 thus generates a driving command value to cause the motor current I flowing through the electric motor 18 to approach the target motor current Icmd. The PWM controller 50 generates a PWM control signal for a duty ratio responsive to the driving command value, and supplies the PWM control signal to the driving circuit 31. In response to this signal, the driving circuit 31 supplies power responsive to the driving command value to the electric motor 18.

The angle controller 42, the road load estimator 43, and the target motor torque setter 46 will be described in detail below. FIG. 4 is a block diagram of the angle controller 42. The angle controller 42 includes a low-pass filter (LPF) 61, a target steering angle changer 62, a feedback controller 63, a feedforward controller 64, a torque adder 65, and a reduction ratio divider 66.

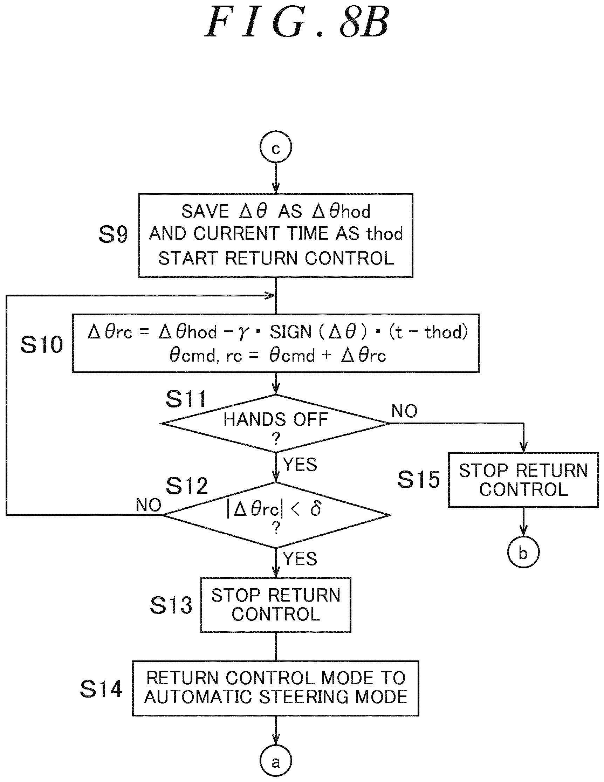

The low-pass filter 61 low-pass filters the target steering angle θcmda received from the upper ECU 201 and thus provides a low-pass filtered target steering angle θcmd. The low-pass filtered target steering angle θcmd is provided to the target steering angle changer 62 and the target motor torque setter 46. The target steering angle changer 62 includes a first input terminal PI and a second input terminal P2. The first input terminal PI receives the low-pass filtered target steering angle θcmd. The second input terminal P2 receives a return control target steering angle θcmd, rc from the target motor torque setter 46 when the target motor torque setter 46 (or more specifically, an automatic steering deactivating controller 46A) exercises return control (see FIG. 8B). The return control will be described below. The target steering angle changer 62 selects and outputs one of the target steering angle θcmd received by the first input terminal PI and the return control target steering angle θcmd, rc received by the second input terminal P2. Under normal conditions, the target steering angle changer 62 selects the target steering angle θcmd received by the first input terminal P1. The target steering angle changer 62 is controlled by the target motor torque setter 46.

The feedback controller 63 is provided to cause the actual steering angle θ, calculated by the reduction ratio divider 52 (see FIG. 2), to approach the target steering angle θcmd or the return control target steering angle θcmd, rc output from the target steering angle changer 62. The feedback controller 63 includes an angle difference calculator 63A and a PD controller 63B. The angle difference calculator 63A calculates the angle difference Δθ between the target steering angle θcmd or the return control target steering angle θcmd, rc output from the target steering angle changer 62 and the actual steering angle θ calculated by the reduction ratio divider 52. The angle difference Δθ is represented by the following equation: Δθ = θcmd - θ or Δθ = θcmd, rc - θ. The angle difference Δθ calculated by the angle difference calculator 63A is provided to the PD controller 63B and the target motor torque setter 46.

The PD controller 63B performs a PD calculation (i.e., a proportional-plus-derivative calculation) on the angle difference Δθ calculated by the angle difference calculator 63A. The PD controller 63B thus calculates a feedback control torque Tfb. The feedback control torque Tfb is provided to the torque adder 65. The feedforward controller 64 is provided to compensate for a response delay, resulting from the inertia of the electric power steering system 1, so as to improve control responsiveness. The feedforward controller 64 includes an angular acceleration calculator 64A and an inertia multiplier 64B. The angular acceleration calculator 64A performs second-order differentiation on the low-pass filtered target steering angle θcmd so as to calculate a target angular acceleration $d^2\theta cmd/dt^2$. The inertia multiplier 64B multiplies the target angular acceleration $d^2\theta cmd/dt^2$, calculated by the angular acceleration calculator 64A, by an inertia J of the electric power steering system 1. The inertia multiplier 64B thus calculates a feedforward torque Tff. The feedforward torque Tff is represented by the following equation: $Tff = J \cdot d^2\theta cmd/dt^2$. In one example, the inertia J is obtained from a physical model of the electric power steering system 1. The feedforward torque Tff is provided to the torque adder 65 in the form of an inertia compensation value.

The torque adder 65 adds the feedforward torque Tff to the feedback control torque Tfb so as to calculate an angle control target steering torque (Tfb + Tff). This provides an angle control target steering torque (i.e., a target torque for the output shaft 9) that compensates for the inertia. Providing such an angle control target steering torque enables high-accuracy motor control (steering angle control).

The angle control target steering torque (Tfb + Tff) is provided to the reduction ratio divider 66. The reduction ratio divider 66 divides the angle control target steering torque (Tfb + Tff) by the reduction ratio N so as to calculate the angle control target torque Tm, ac (i.e., a target torque for the electric motor 18). The angle control target torque Tm, ac is provided to the target motor torque setter 46 (see FIG. 2).

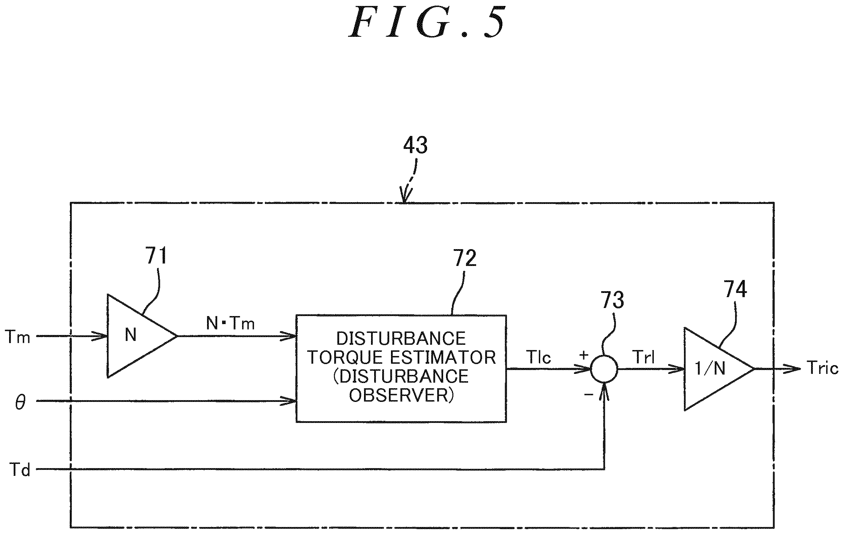

FIG. 5 is a block diagram of the road load estimator 43. The road load estimator 43 includes a reduction ratio multiplier 71, a disturbance torque estimator (disturbance observer) 72, a subtracter 73, and a reduction ratio divider 74. The reduction ratio multiplier 71 multiplies the target motor torque Tm, set by the target motor torque setter 46, by the reduction ratio N. The reduction ratio multiplier 71 thus calculates a target steering torque N·Tm.

The disturbance torque estimator 72 estimates a nonlinear torque produced in the form of a disturbance in a plant (i.e., an object to be controlled or an object to be driven by the electric motor 18). The nonlinear torque is a disturbance torque that is a torque applied to the object to be driven by the electric motor 18 other than the motor torque. The disturbance torque estimator 72 estimates the disturbance torque (disturbance load) Tlc, the steering angle θ, and a steering angle differential value (angular velocity) dθ/dt in accordance with the target steering torque N·Tm (i.e., a target value for the plant) and the actual steering angle θ (i.e., an output from the plant). The estimated values of the disturbance torque Tlc, the steering angle θ, and the steering angle differential value (angular velocity) dθ/dt may hereinafter be respectively denoted by $\hat{T}lc$, $\hat{\theta}$, and $\hat{d\theta}/dt$.

The subtracter 73 subtracts the steering torque Td, detected by the torque sensor 12, from the disturbance torque Tlc estimated by the disturbance torque estimator 72. The subtracter 73 thus calculates the road load torque Trl to be transmitted to the output shaft 9 (or more specifically, the speed reducer 19). The road load torque Trl is represented by the following equation: Trl = Tlc - Td. The reduction ratio divider 74 divides the road load torque Trl (which has been calculated by the subtracter 73 and is to be transmitted to the output shaft 9) by the reduction ratio N. The reduction ratio divider 74 thus calculates the road load torque Trlc to be transmitted to the shaft of the electric motor 18 through the speed reducer 19. The road load torque Trlc calculated by the reduction ratio divider 74 is provided to the torque subtracter 44 (see FIG. 2) and the target motor torque setter 46 (see FIG. 2).

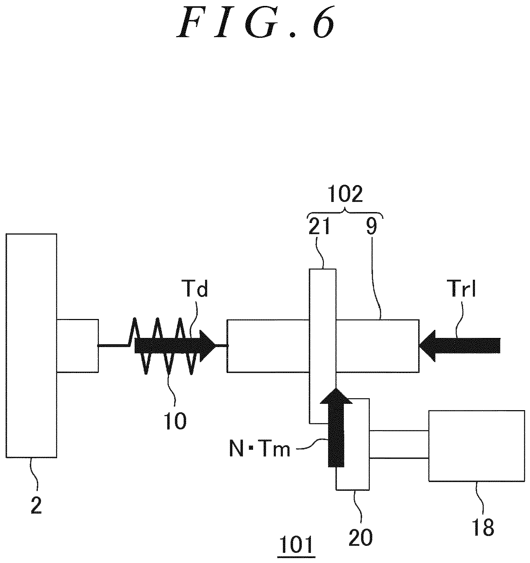

The disturbance torque estimator 72 will be described in detail. The disturbance torque estimator 72 is a disturbance observer to estimate the disturbance torque Tlc, the steering angle θ, and the angular velocity dθ/dt using a physical model of the electric power steering system 1. FIG. 6 is a schematic diagram illustrating a configuration example of a physical model 101 of the electric power steering system 1.

The physical model 101 includes a plant 102 that includes the output shaft 9 and the worm wheel 21 secured to the output shaft 9. The plant 102 is an object to be driven by the electric motor 18. The plant 102 receives the steering torque Td from the steering wheel 2 through the torsion bar 10 and receives the road load torque Trl from the steered wheels 3. The plant 102 further receives the target steering torque N·Tm through the worm gear 20.

An equation of motion for the inertia of the physical model 101 is represented as Eq. (1), where J denotes the inertia of the plant 102:

$$J\ddot{\theta} = N \cdot Tm + Tlc \quad \cdots (1)$$
$$Tlc = Td + Trl$$

$d^2\theta/dt^2$ denotes an acceleration of the plant 102. N denotes the reduction ratio of the speed reducer 19, and Tlc denotes a disturbance torque that is a torque applied to the plant 102 other than a motor torque. In this embodiment, the disturbance torque Tlc is assumed to mainly include the steering torque Td and the road load torque Trl. In one example, an equation of state for the physical model 101 illustrated in FIG. 6 is represented as Eq. (2):

$$\begin{cases} \dot{x} = Ax + B_1u_1 + B_2u_2 \\ y = Cx + Du_1 \end{cases} \quad \cdots (2)$$

In Eq. (2), x denotes a state variable vector, u1 denotes a known input vector, u2 denotes an unknown input vector, y denotes an output vector (measured value), A denotes a system matrix, B1 denotes a first input matrix, B2 denotes a second input matrix, C denotes an output matrix, and D denotes a direct matrix.

The equation of state is extended to a system including an unknown input vector u1 in the form of a single state. In one example, an equation of state for the extended system (i.e., an extended equation of state) is represented as Eq. (3):

$$\begin{cases} \dot{X_e} = A_eX_e + B_eU_1 \\ y = C_eX_e \end{cases} \quad \cdots (3)$$

In Eq. (3), Xe denotes a state variable vector for the extended system and is represented by Eq. (4):

$$X_e = \begin{bmatrix} x \\ u_2 \end{bmatrix} \quad \cdots (4)$$

In Eq. (3), Ae denotes a system matrix for the extended system, Be denotes a known input matrix for the extended system, and Ce denotes an output matrix for the extended system. From the extended equation of state, i.e., Eq. (3), a disturbance observer (i.e., an extended state observer) is created. The disturbance observer is represented by Eq. (5):

$$\begin{cases} \dot{\hat{X_e}} = A_e\hat{X_e} + B_eU_1 + L(y - \hat{y}) \\ \hat{y} = C_eX_e \end{cases} \quad \cdots (5)$$

In Eq. (5), $\hat{X_e}$ denotes an estimated value of Xe, L denotes an observer gain, and $\hat{y}$ denotes an estimated value of y. $\hat{X_e}$ is represented by Eq. (6):

$$\hat{X_e} = \begin{bmatrix} \hat{\theta} \\ \dot{\hat{\theta}} \\ \hat{T}_{lc} \end{bmatrix} \quad \cdots (6)$$

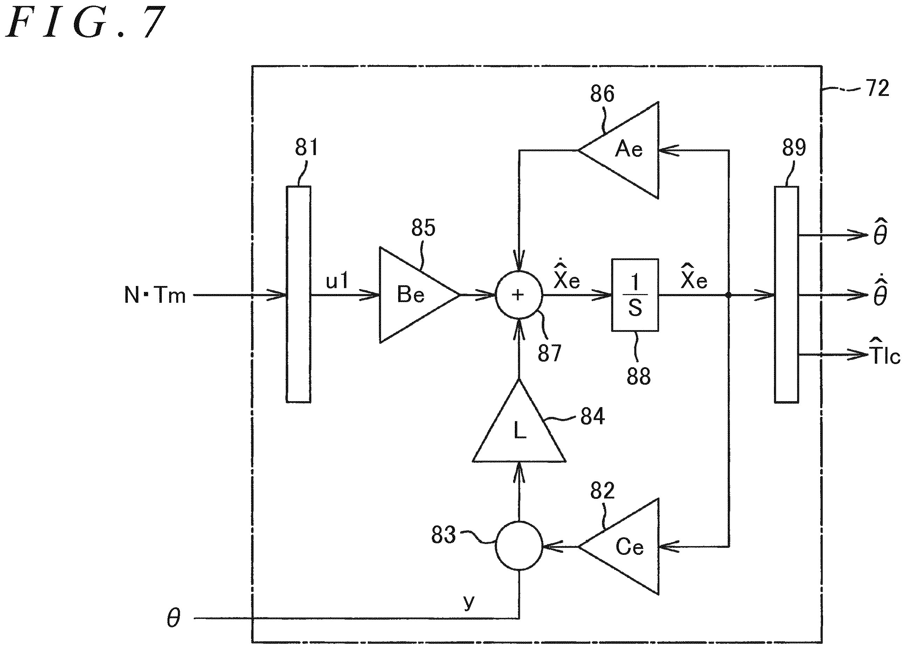

In Eq. (6), $\hat{\theta}$ denotes an estimated value of θ, and $\hat{T}_{lc}$ denotes an estimated value of Tlc. The disturbance torque estimator 72 calculates the state variable vector $\hat{X_e}$ in accordance with Eq. (6). FIG. 7 is a block diagram of the disturbance torque estimator 72. The disturbance torque estimator 72 includes an input vector receiver 81, an output matrix multiplier 82, a first adder 83, a gain multiplier 84, an input matrix multiplier 85, a system matrix multiplier 86, a second adder 87, an integrator 88, and a state variable vector outputter 89.

The target steering torque N·Tm calculated by the reduction ratio multiplier 71 (see FIG. 5) is provided to the input vector receiver 81. The input vector receiver 81 outputs the input vector u1. An output from the integrator 88 is the state variable vector $\hat{X_e}$ as indicated by Eq. (6). At the start of calculation, an initial value is provided in the form of the state variable vector $\hat{X_e}$. In one example, the initial value of the state variable vector $\hat{X_e}$ is zero.

The system matrix multiplier 86 multiplies the state variable vector $\hat{X}e$ by the system matrix Ae. The output matrix multiplier 82 multiplies the state variable vector $\hat{X}e$ by the output matrix Ce. The first adder 83 subtracts the output (Ce·$\hat{X}e$), provided from the output matrix multiplier 82, from the output vector (measured value) y that is the actual steering angle θ calculated by the reduction ratio divider 52 (see FIG. 2). In other words, the first adder 83 calculates a difference between the output vector y and the output vector estimated value $\hat{y}$. The output vector estimated value $\hat{y}$ is represented by the following equation: $\hat{y}$ = Ce·$\hat{X}e$. The difference between the output vector y and the output vector estimated value $\hat{y}$ is represented as y - $\hat{y}$. The gain multiplier 84 multiplies the output (y - $\hat{y}$) from the first adder 83 by the observer gain L as indicated by Eq. (5).

The input matrix multiplier 85 multiplies the input vector u1, output from the input vector receiver 81, by the input matrix Be. The second adder 87 adds up the output (Be·u1) from the input matrix multiplier 85, the output (Ae·$\hat{X}e$) from the system matrix multiplier 86, and the output from the gain multiplier 84. The output from the gain multiplier 84 is represented by L(y - $\hat{y}$). The second adder 87 thus calculates a state variable vector differential value d$\hat{X}e$/dt. The integrator 88 integrates the output (d$\hat{X}e$/dt) from the second adder 87 so as to calculate the state variable vector $\hat{X}e$. The state variable vector outputter 89 outputs the disturbance torque estimated value $\hat{T}lc$, the steering angle estimated value $\hat{\theta}$, and the angular velocity estimated value d$\hat{\theta}$/dt in accordance with the state variable vector $\hat{X}e$.

Unlike the extended state observer described above, a typical disturbance observer includes a reverse model of a plant and a low-pass filter. An equation of motion for the plant in this case is represented as Eq. (7):

$$J\ddot{\theta} = N \cdot Tm + Tlc \quad \cdot \cdot \cdot (7)$$

Accordingly, the reverse model of the plant is represented by Eq. (8):

$$Tlc = J\ddot{\theta} - N \cdot Tm \quad \cdot \cdot \cdot (8)$$

An input to a typical disturbance observer includes $J \cdot d^2\theta/dt^2$ and Tm and uses a second-order differential value of the actual steering angle θ, so that the input is significantly influenced by noise in the rotation angle sensor 23. In contrast, the extended state observer described in this embodiment estimates a disturbance torque in an integral mode in accordance with the difference (y - $\hat{y}$) between the actual steering angle θ and the steering angle estimated value $\hat{\theta}$ estimated from a motor torque input, thus reducing differentiation-induced noise influence.

The target motor torque setter 46 will be described in detail below. When the control mode is the manual steering mode, the target assist torque Tm, mc, set by the assist controller 41, is set to be the target motor torque Tm by the target motor torque setter 46. When the control mode is the automatic steering mode, the target automatic steering torque Tm, ad, calculated by the torque subtracter 44, is set to be the target motor torque Tm by the target motor torque setter 46. The target automatic steering torque Tm, ad is represented by the following equation: Tm, ad = Tm, ac - Trlc.

The target motor torque setter 46 includes the automatic steering deactivating controller 46A (see FIG. 2). The automatic steering deactivating controller 46A changes the control mode from the automatic steering mode to the manual steering mode in response to an intervening operation resulting from a steering operation performed by the driver during the automatic steering mode. The automatic steering deactivating controller 46A determines whether a predetermined transition control start requirement is satisfied. Upon determining that the transition control start requirement is satisfied, the automatic steering deactivating controller 46A starts transition control. The transition control start requirement includes at least a requirement that an absolute value |Td | of the steering torque Td detected by the torque sensor 12 be equal to or greater than a predetermined torque threshold value.

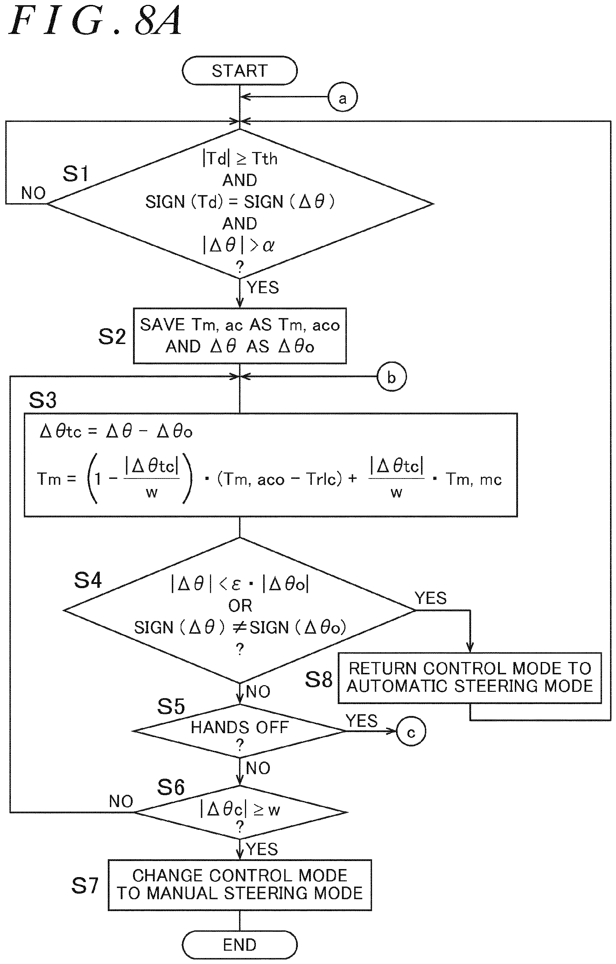

FIGS. 8A and 8B are flowcharts illustrating exemplary operations to be carried out by the automatic steering deactivating controller 46A during the automatic steering mode. In step S1, the automatic steering deactivating controller 46A first determines whether the transition control start requirement is satisfied. In this example, the transition control start requirement is that the absolute value |Td| of the steering torque Td be equal to or greater than a predetermined torque threshold value Tth (where Tth > 0), the sign (Td) of the steering torque Td be identical to the sign (Δθ) of the angle difference Δθ, and an absolute value |Δθ| of the angle difference Δθ be greater than an angle threshold value α (where α > 0). The requirement that the sign (Td) of the steering torque Td be identical to the sign (Δθ) of the angle difference Δθ means that the direction of the steering torque Td is a direction in which the absolute value of the angle difference Δθ increases (i.e., a direction in which the actual steering angle θ goes away from the target steering angle). The angle threshold value α is set to be sufficiently smaller than a predetermined transition angle width w (where w > 0) described below.

Upon determining in step S1 that the transition control start requirement is not satisfied (i.e., when the answer is NO in step S1), the automatic steering deactivating controller 46A performs step S1 again. Upon determining in step S1 that the transition control start requirement is satisfied (i.e., when the answer is YES in step S1), the automatic steering deactivating controller 46A starts the transition control. Specifically, the automatic steering deactivating controller 46A advances the process to step S2. In step S2, the angle control target torque Tm, ac (i.e., an output from the angle controller 42) obtained when the transition control start requirement is determined to be satisfied is saved to a memory in the form of a transition control start angle control target torque Tm, aco by the automatic steering deactivating controller 46A. As used herein, the term "transition control start angle control target torque Tm, aco" refers to an angle control target torque at the start of the transition control. In step S2, the angle difference $\Delta\theta$ obtained when the transition control start requirement is determined to be satisfied is saved to the memory in the form of a transition control start angle difference $\Delta\theta o$ by the automatic steering deactivating controller 46A. As used herein, the term "transition control start angle difference $\Delta\theta o$" refers to an angle difference at the start of the transition control.

In step S3, the automatic steering deactivating controller 46A sets a transition control target motor torque Tm in accordance with Eq. (9):

$$\mathrm{Tm} = \{1 - (\left|\Delta\theta_{tc}\right|/w)\}\cdot(\mathrm{Tm,\ aco} - \mathrm{Trlc}) + (\left|\Delta\theta_{tc}\right|/w)\cdot\mathrm{Tm,\ mc} \qquad ...\ (9)$$

where $\Delta\theta_{tc} = \Delta\theta - \Delta\theta o$

The electric motor 18 is thus controlled such that the electric motor 18 produces a motor torque equal to the transition control target motor torque Tm set in accordance with Eq. (9).

In Eq. (9), w (where w > 0) denotes a preset transition angle width. $\Delta\theta_{tc}$ denotes a difference between the present angle difference $\Delta\theta$ and the transition control start angle difference $\Delta\theta o$ saved to the memory in step S2. The difference $\Delta\theta_{tc}$ is an example of a "value $\Delta\theta x$ responsive to the angle difference $\Delta\theta$". Tm, aco denotes the transition control start angle control target torque saved to the memory in step S2. Trlc denotes the present road load torque estimated by the road load estimator 43. Tm, mc denotes the present target assist torque set by the assist controller 41.

Using Eq. (9), weights are assigned to (Tm, aco - Trlc) and Tm, mc in accordance with the ratio of $\left|\Delta\theta_{tc}\right|$ to the transition angle width w so as to set the target motor torque Tm. The ratio of $\left|\Delta\theta_{tc}\right|$ to the transition angle width w is represented by $\left|\Delta\theta_{tc}\right|/w$. As the absolute value $\left|\Delta\theta_{tc}\right|$ increases, the weight $\{1 - (\left|\Delta\theta_{tc}\right|/w)\}$ assigned to (Tm, aco - Trlc) decreases, and the weight $(\left|\Delta\theta_{tc}\right|/w)$ assigned to Tm, mc increases. In other words, as the angle difference $\Delta\theta$ increases relative to the transition control start angle difference $\Delta\theta o$, the weight assigned to (Tm, aco - Trlc) decreases, and the weight assigned to Tm, mc increases. Consequently, the control mode is gradually changed to the manual steering mode.

The present embodiment involves using, instead of the target automatic steering torque (Tm, ac - Trlc), the target automatic steering torque (Tm, aco - Tr1c) in the first term in the right side of Eq. (9). In other words, the present embodiment involves using the transition control start angle control target torque Tm, aco instead of the angle control target torque Tm, ac output from the angle controller 42. The reasons for this are described below. A steering operation (i.e., a steering intervention) performed by the driver during automatic steering so as to deactivate automatic steering increases the angle difference $\Delta\theta$. The increase in the angle difference $\Delta\theta$ increases the absolute value of the angle control target torque Tm, ac set by the angle controller 42. The increase in the absolute value of the angle control target torque Tm, ac results in an increase in steering reaction force when the driver performs the steering intervention. The increase in steering reaction force makes it difficult for the driver to perform the steering intervention. To solve this problem, the present embodiment involves using, instead of the angle control target torque Tm, ac set by the angle controller 42, the transition control start angle control target torque Tm, aco. This prevents an excessive increase in steering reaction force.

In step S4, the automatic steering deactivating controller 46A determines whether a transition control stop requirement is satisfied. The transition control stop requirement is that one of first and second requirements described below be satisfied. The first requirement is that the absolute value $\left|\Delta\theta\right|$ of the angle difference $\Delta\theta$ be smaller than a value $\varepsilon\cdot\left|\Delta\theta o\right|$. The value $\varepsilon\cdot\left|\Delta\theta o\right|$ is obtained by multiplying the absolute value $\left|\Delta\theta o\right|$ of the transition control start angle difference $\Delta\theta o$ by a predetermined value $\varepsilon$ (where $0 < \varepsilon < 1$). The second requirement is that the sign ($\Delta\theta$) of the angle difference $\Delta\theta$ is different from the sign ($\Delta\theta o$) of the transition control start angle difference $\Delta\theta o$. The second requirement means that the direction of the steering torque Td is a direction in which the absolute value of the angle difference $\Delta\theta$ decreases (i.e., a direction in which the actual steering angle $\theta$ approaches the target steering angle).

Upon determining that the transition control stop requirement is not satisfied (i.e., when the answer is NO in step S4), the automatic steering deactivating controller 46A determines in step S5 whether the result of the determination made by the steering wheel operating condition determiner 45 indicates the hands-off condition in which the driver is not gripping the steering wheel 2. When the result of the determination made by the steering wheel operating condition determiner 45 indicates the hands-on condition in which the driver is gripping the steering wheel 2 (i.e., when the answer is NO in step S5), the automatic steering deactivating controller 46A determines in step S6 whether the absolute value $\left|\Delta\theta_{tc}\right|$ of the angle difference $\Delta\theta_{tc}$ is equal to or greater than the transition angle width w. Upon determining that the absolute value $\left|\Delta\theta_{tc}\right|$ of the angle difference $\Delta\theta_{tc}$ is smaller than the transition angle width w (i.e., when the answer is NO in step S6), the automatic steering deactivating controller 46A returns the process to step S3. The automatic steering deactivating controller 46A thus performs step S3 and the subsequent steps again.

Upon determining in step S6 that the absolute value $|\Delta\theta_{tc}|$ of the angle difference $\Delta\theta_{tc}$ is equal to or greater than the transition angle width w (i.e., when the answer is YES in step S6), the automatic steering deactivating controller 46A terminates the transition control and changes the control mode to the manual steering mode in step S7. The automatic steering deactivating controller 46A then terminates the process for changing the control mode during the automatic steering mode. Upon determining in step S4 that the transition control stop requirement is satisfied (i.e., when the answer is YES in step S4), the automatic steering deactivating controller 46A stops the transition control so as to return the control mode to the automatic steering mode in step S8. The automatic steering deactivating controller 46A then returns the process to step S1.

Upon determining in step S5 that the result of the determination made by the steering wheel operating condition determiner 45 indicates the hands-off condition in which the driver is not gripping the steering wheel 2 (i.e., when the answer is YES in step S5), the automatic steering deactivating controller 46A advances the process to step S9. In step S9, the automatic steering deactivating controller 46A saves the angle difference $\Delta\theta$ at this point to the memory in the form of a return control start angle difference $\Delta\theta$hod, and saves the time at this point to the memory in the form of a return control start time thod. As used herein, the term "return control start angle difference $\Delta\theta$hod" refers to an angle difference at the start of the return control. As used herein, the term "return control start time thod" refers to a time at the start of the return control. The automatic steering deactivating controller 46A then starts the return control to cause the actual steering angle $\theta$ to gradually approach the target steering angle $\theta$cmd.

In step S10, the automatic steering deactivating controller 46A calculates a return control target steering angle $\theta$cmd, rc so as to provide the return control target steering angle $\theta$cmd, rc to the second input terminal P2 of the target steering angle changer 62 (see FIG. 4), and controls the target steering angle changer 62 such that the target steering angle changer 62 selects and outputs the return control target steering angle $\theta$cmd, rc input to the second input terminal P2. The automatic steering deactivating controller 46A then outputs the target automatic steering torque Tm, ad in the form of the target motor torque Tm. The target automatic steering torque Tm, ad is calculated using the return control target steering angle $\theta$cmd, rc and is output from the torque subtracter 44.

Specifically, the automatic steering deactivating controller 46A calculates the return control target steering angle $\theta$cmd, rc in accordance with Eq. (10):

$$\theta\text{cmd, rc} = \theta\text{cmd} + \Delta\theta\text{rc}$$

$$\Delta\theta\text{rc} = \Delta\theta\text{hod} - \gamma\cdot\text{sign}(\Delta\theta)\cdot(t - \text{thod}) \qquad \dots (10)$$

In Eq. (10), $\Delta\theta$hod denotes the return control start angle difference $\Delta\theta$ saved to the memory in step S9, $\gamma$ denotes a predetermined value (where $\gamma > 0$), sign($\Delta\theta$) denotes the sign of the angle difference, t denotes the present time, and thod denotes the return control start time saved to the memory in step S9.

In step S11, the automatic steering deactivating controller 46A determines whether the result of the determination made by the steering wheel operating condition determiner 45 indicates the hands-off condition in which the driver is not gripping the steering wheel 2. When the result of the determination made by the steering wheel operating condition determiner 45 indicates the hands-off condition (i.e., when the answer is YES in step S11), the automatic steering deactivating controller 46A determines in step S12 whether the absolute value $|\Delta\theta$rc$|$ of $\Delta\theta$rc calculated using Eq. (10) is smaller than a predetermined value $\delta$ (where $\delta > 0$). Upon determining that the absolute value $|\Delta\theta$rc$|$ of $\Delta\theta$rc is equal to or greater than the predetermined value $\delta$ (i.e., when the answer is NO in step S12), the automatic steering deactivating controller 46A returns the process to step S10. The automatic steering deactivating controller 46A thus performs step S10 and the subsequent steps again.

Upon determining in step S12 that the absolute value $|\Delta\theta$rc$|$ of $\Delta\theta$rc is smaller than the predetermined value $\delta$ (i.e., when the answer is YES in step S12), the automatic steering deactivating controller 46A stops the return control in step S13. Specifically, the automatic steering deactivating controller 46A controls the target steering angle changer 62 such that the target steering angle changer 62 selects and outputs the target steering angle $\theta$cmd input to the first input terminal P1. The automatic steering deactivating controller 46A returns the control mode to the automatic steering mode in step S14 and then returns the process to step S1.

Upon determining in step S11 that the result of the determination made by the steering wheel operating condition determiner 45 indicates the hands-on condition (i.e., when the answer is NO in step S11), the automatic steering deactivating controller 46A stops the return control in step S15 and then returns the process to step S3. Specifically, the automatic steering deactivating controller 46A controls the target steering angle changer 62 such that the target steering angle changer 62 selects and outputs the target steering angle $\theta$cmd input to the first input terminal PI, and then returns the process to step S3.

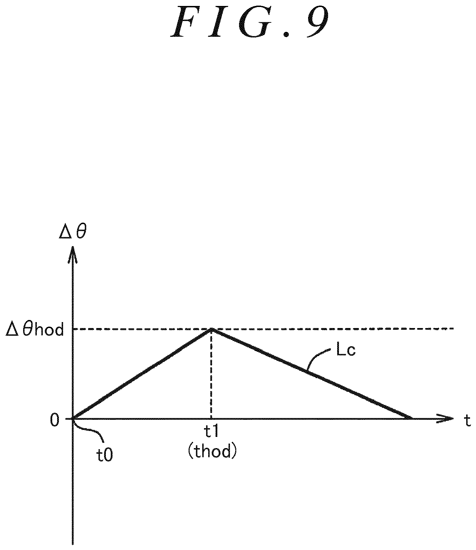

Referring now to FIG. 9, the return control will be described. For the sake of simplicity, the following description is based on the assumption that the target steering angle θcmd is zero degrees. The angle difference $\Delta\theta$ is thus equal to the actual steering angle θ. Suppose that the actual steering angle θ increases from a transition control start time t0, and the automatic steering deactivating controller 46A determines at a time t1 that the result of the determination made by the steering wheel operating condition determiner 45 indicates the hands-off condition in step S5. In this case, the time t1 is saved to the memory in the form of the return control start time thod, and the angle difference $\Delta\theta$ at the time t1 is saved to the memory in the form of the return control start angle difference $\Delta\theta$hod.

The return control then involves: calculating $\Delta\theta$rc using Eq. (10); calculating the return control target steering angle θcmd, rc using $\Delta\theta$rc; calculating the target automatic steering torque Tm, ad (i.e., an output from the torque subtracter 44) using the return control target steering angle θcmd, rc; and controlling the electric motor 18 in accordance with the target automatic steering torque Tm, ad. In this example, the sign($\Delta\theta$) is greater than zero, so that the value of the second term in the right side of Eq. (10), i.e., $\{\gamma \cdot \text{sign}(\Delta\theta) \cdot (t - thod)\}$, gradually increases with the lapse of time. $\gamma$ denotes the rate of change of $\{\gamma \cdot \text{sign}(\Delta\theta) \cdot (t - thod)\}$ with respect to time. Accordingly, as indicated by the straight line Lc in FIG. 9, $\Delta\theta$rc calculated using Eq. (10) gradually decreases with the lapse of time. In this example, θcmd, rc = $\Delta\theta$rc because θcmd is zero. The actual steering angle θ thus gradually approaches the original target steering angle θcmd as indicated by the straight line Lc. In this example, $\theta = \Delta\theta$, and the original target steering angle θcmd is zero degrees. When the absolute value $|\Delta\theta rc|$ of $\Delta\theta$rc has fallen below the predetermined value $\delta$, the return control is terminated, returning the control mode to the automatic steering mode. Suppose that during the transition control, the steering wheel operating condition becomes the hands-off condition in which the driver is not gripping the steering wheel 2. In such a case, the vehicle is automatically steered such that the actual steering angle θ approaches the target steering angle θcmd more gradually than when the control mode is the normal automatic steering mode.

In the above-described embodiment, the transition control is terminated when the absolute value $|\Delta\theta_{tc}|$ of the difference $\Delta\theta_{tc}$ between the angle difference $\Delta\theta$ and the transition control start angle difference $\Delta\theta$o is equal to or greater than the transition angle width w. The driver is thus able to change a transition control time (i.e., the time between the start and end of the transition control) by performing a steering operation. Specifically, the greater the steering force applied to the steering wheel 2 by the driver, the shorter the time required for the absolute value $|\Delta\theta_{tc}|$ to reach the transition angle width w, resulting in a reduction in the transition control time. Consequently, the driver is able to quickly deactivate the automatic steering mode in the event of an emergency, for example.

The above-described embodiment suppresses an increase in steering reaction force during the transition control. This makes it easy for the driver to perform a steering intervention. After the transition control has started and before the absolute value $|\Delta\theta_{tc}|$ becomes equal to or greater than the transition angle width w, the above-described embodiment involves stopping the transition control so as to automatically return the control mode to the automatic steering mode when the absolute value $|\Delta\theta|$ of the angle difference $\Delta\theta$ is smaller than the value $\varepsilon \cdot |\Delta\theta o|$ or the sign of $\Delta\theta$ is different from the sign of $\Delta\theta$o. For example, suppose that after the start of the transition control, a steering operation is performed by the driver such that the vehicle travels along a target path. In such a case, this embodiment enables the control mode to automatically return to the automatic steering mode.

When the steering wheel operating condition is the hands-off condition in which the driver is not gripping the steering wheel 2 during the transition control, the above-described embodiment involves performing the return control so as to automatically steer the vehicle such that the actual steering angle θ gradually approaches the target steering angle θcmd. Although the embodiment of the invention has been described thus far, the invention may be embodied in many other forms. As indicated by Eq. (9), step S3 of FIG. 8A involves setting the transition control target motor torque Tm using the absolute value $|\Delta\theta_{tc}|$ of the angle difference $\Delta\theta_{tc}$ (where $\Delta\theta_{tc} = \Delta\theta - \Delta\theta$o) between the present angle difference $\Delta\theta$ and the transition control start angle difference $\Delta\theta$o saved to the memory in step S2. Alternatively, the transition control target motor torque Tm may be set using the absolute value $|\Delta\theta|$ of the angle difference $\Delta\theta$ instead of the absolute value $|\Delta\theta_{tc}|$. In other words, the "value $\Delta\theta$x responsive to the angle difference $\Delta\theta$" may be the difference $\Delta\theta_{tc}$ between the present angle difference $\Delta\theta$ and the transition control start angle difference $\Delta\theta$o or may be the angle difference $\Delta\theta$ itself.

The process illustrated in FIGS. 8A and 8B may skip step S5 of FIG. 8A and steps S9 to S15 of FIG. 8B. In other words, the process illustrated in FIGS. 8A and 8B may skip the return control described above. Although the angle controller 42 includes the feedforward controller 64 in the above-described embodiment, the angle controller 42 may include no feedforward controller 64. Various design changes may be made to the invention within the scope of the claims.

## Claims

1. A vehicle steering system comprising:

   an electric motor (18) to provide a steering force to a steering operation mechanism (4) of a vehicle;
   a setter (46) configured to set an angle control target torque (Tm, ac) to cause an angle difference ($\Delta\theta$) between

a target steering angle (θcmd) and an actual steering angle (θ) to approach zero;
an estimator (43) configured to estimate a road load torque (Trlc) received from a road by an object to be driven by the electric motor (18);
an automatic steering controller configured to set a target automatic steering torque (Tm, ad) in accordance with the angle control target torque (Tm, ac) set by the setter (46) and the road load torque (Trlc) estimated by the estimator (43), and configured to control the electric motor (18) in accordance with the target automatic steering torque (Tm, ac) so as to exercise automatic steering control;
a manual steering controller configured to control the electric motor (18) in accordance with a target assist torque (Tm, mc) responsive to a steering torque (Td) so as to exercise manual steering control; and
an automatic steering deactivator configured to make switching from the automatic steering control to the manual steering control in accordance with a steering operation performed by a driver during the automatic steering control exercised by the automatic steering controller, wherein
the automatic steering deactivator includes a transition controller configured to exercise transition control when a transition control start requirement is satisfied, the transition control start requirement including at least a requirement that an absolute value of the steering torque (Td) be equal to or greater than a first predetermined value, and **characterized in, that**
the transition controller includes

a first controller configured to, at a time when the transition control start requirement is satisfied, save the angle control target torque (Tm, ac) set by the setter (46), the angle control target torque (Tm, ac) being saved in a form of a transition control start angle control target torque (Tm, aco),
a second controller configured to calculate a transition control target automatic steering torque in accordance with the transition control start angle control target torque (Tm, aco) and the road load torque (Trlc) estimated by the estimator (43), configured to assign weights to the transition control target automatic steering torque and the target assist torque (Tm, mc) using an absolute value of a value responsive to the angle difference (Δθ) so as to calculate a target motor torque (Tm), and configured to control the electric motor (18) in accordance with the target motor torque (Tm), wherein the value responsive to the angle difference (Δθ) is the angle difference (Δθ) itself or a difference between a present angle difference (Δθ) and the transition control start angle difference (Δθo), and
a third controller configured to, when the absolute value of the value responsive to the angle difference (Δθ) is equal to or greater than a second predetermined value, terminate the transition control so as to make switching from the automatic steering control to the manual steering control.

2. The vehicle steering system according to claim 1, wherein
the transition controller further includes a fourth controller configured to save the angle difference (Δθ) at the time when the transition control start requirement is satisfied, the angle difference (Δθ) being saved in a form of the transition control start angle difference (Δθo), and
the value responsive to the angle difference (Δθ) is a difference between a present angle difference (Δθ) and the transition control start angle difference (Δθo).

3. The vehicle steering system according to claim 1 or 2, wherein
the second controller assigns weights to the transition control target automatic steering torque and the target assist torque (Tm, mc) in accordance with a ratio between the second predetermined value and the absolute value of the value responsive to the angle difference (Δθ) so as to calculate the target motor torque (Tm).

4. The vehicle steering system according to any one of claims 1 to 3, wherein
assuming that Δθx denotes the value responsive to the angle difference, Tm, aco denotes the transition control start angle control target torque, Trlc denotes the road load torque estimated by the estimator, Tm, mc denotes the target assist torque, w (where w > 0) denotes the second predetermined value, and Tm denotes the target motor torque for the transition control, Tm is represented by Eq. (b):

$$\mathrm{Tm} = \{1 - (\left|\Delta\theta x\right|/w)\}\cdot(\mathrm{Tm, aco} - \mathrm{Trlc}) + (\left|\Delta\theta x\right|/w)\cdot\mathrm{Tm, mc} \quad \ldots (b)$$

5. The vehicle steering system according to any one of claims 1 to 4, wherein
the automatic steering deactivator further includes a transition control stopper configured to, when the absolute value of the value responsive to the angle difference (Δθ) is smaller than a third predetermined value during the transition control, stop the transition control so as to make switching to the automatic steering control, the third predetermined value being greater than zero.

6. The vehicle steering system according to any one of claims 1 to 5, further comprising:

a hands-off condition detector configured to detect a hands-off condition in which the driver is not gripping a steering wheel (2) of the vehicle; and
a return controller configured to, when the hands-off condition is detected by the hands-off condition detector during the transition control, exercise return control to control the electric motor (18) such that the actual steering angle ($\theta$) approaches the target steering angle ($\Delta\theta$cmd) more gradually than when the automatic steering control is exercised by the automatic steering controller.

**Patentansprüche**

1. Fahrzeuglenksystem mit:

einem elektrischen Motor (18), um einem Lenkbetriebsmechanismus (4) eines Fahrzeugs eine Lenkkraft bereitzustellen;
einem Einsteller (46), der konfiguriert ist ein Winkelsteuerzieldrehmoment (Tm, ac) einzustellen, um zu bewirken, dass sich eine Winkeldifferenz ($\Delta\theta$) zwischen einem Ziellenkwinkel ($\theta$cmd) und einem tatsächlichen Lenkwinkel ($\theta$) Null annähert;
einem Abschätzer (43), der konfiguriert ist ein Straßenlastdrehmoment (Trlc) abzuschätzen, das von einer Straße durch ein Objekt, das durch den elektrischen Motor (18) angetrieben ist, erhalten ist;
einer automatischen Lenksteuerungseinheit, die konfiguriert ist, ein automatisches Ziellenkdrehmoment (Tm, ad) in Übereinstimmung mit dem Winkelsteuerzieldrehmoment (Tm, ac), das durch den Einsteller (46) eingestellt ist, und dem Straßenlastdrehmoment (Trlc), das durch den Abschätzer (43) abgeschätzt ist, einzustellen, und konfiguriert ist, den elektrischen Motor (18) in Übereinstimmung mit dem automatischen Ziellenkdrehmoment (Tm, ac) zu steuern, um eine automatische Lenksteuerung auszuüben;
einer manuellen Lenksteuerungseinheit, die konfiguriert ist den elektrischen Motor (18) in Übereinstimmung mit einem Zielhilfsdrehmoment (Tm, mc), das auf ein Lenkdrehmoment (Td) reagiert, zu steuern, um eine manuelle Lenksteuerung auszuüben;
einem automatischen Lenkdeaktivator, der konfiguriert ist ein Schalten von der automatischen Lenksteuerung zu der manuellen Lenksteuerung in Übereinstimmung mit einem Lenkvorgang, der durch einen Fahrer durchgeführt ist, zu machen, während die automatische Lenksteuerung durch die automatische Lenksteuerungseinheit ausgeführt ist, wobei
der automatische Lenkdeaktivator eine Übergangssteuerungseinheit enthält, die konfiguriert ist eine Übergangssteuerung durchzuführen, wenn eine Übergangssteuerungsstartbedingung erfüllt ist, wobei die Übergangssteuerungsstartbedingung mindestens eine Bedingung enthält, dass ein absoluter Wert des Lenkdrehmoments (Td) gleich oder größer als ein erster vorgegebener Wert ist, und **dadurch gekennzeichnet, dass**
die Übergangssteuerungseinheit
eine erste Steuerungseinheit, die konfiguriert ist zu einer Zeit, wenn die Übergangssteuerungsstartbedingung erfüllt ist, das Winkelsteuerzieldrehmoment (Tm, ac), das durch den Einsteller (46) eingestellt ist, zu speichern, wobei das Winkelsteuerzieldrehmoment (Tm, ac) in Form eines Übergangssteuerstartwinkelsteuerzieldrehmoments (Tm, aco) gespeichert ist,
eine zweite Steuerungseinheit, die konfiguriert ist, ein automatisches Übergangssteuerziellenkdrehmoment in Übereinstimmung mit dem Übergangssteuerstartwinkelsteuerzieldrehmoments (Tm, aco) und dem Straßenlastdrehmoment (Trlc), das durch den Abschätzer (43) abgeschätzt ist, zu berechnen, und konfiguriert ist, Lasten zu dem automatischen Übergangssteuerziellenkdrehmoment und dem Zielhilfsdrehmoment (Tm, mc) mit Benutzung eines absoluten Werts eines Werts, der auf die Winkeldifferenz ($\Delta\theta$) reagiert, zuzuordnen, um ein Zielmotordrehmoment (Tm) zu berechnen, und konfiguriert ist, den elektrischen Motor (18) in Übereinstimmung mit dem Zielmotordrehmoment (Tm) zu steuern, wobei der Wert, der auf die Winkeldifferenz ($\Delta\theta$) reagiert, die Winkeldifferenz ($\Delta\theta$) selbst ist oder eine Differenz zwischen einer vorliegenden Winkeldifferenz ($\Delta\theta$) und der Übergangssteuerstartwinkeldifferenz ($\Delta\theta$o) ist, und

eine dritte Steuerungseinheit enthält, die konfiguriert ist die Übergangssteuerung abzubrechen, wenn der absolute Wert des Wertes, der auf die Winkeldifferenz ($\Delta\theta$) reagiert, gleich oder größer als ein zweiter vorgegebener Wert ist, um ein Schalten von der automatischen Lenksteuerung zu der manuellen Lenksteuerung zu machen.

2. Fahrzeuglenksystem gemäß Anspruch 1, wobei
die Übergangssteuerungseinheit zusätzlich eine vierte Steuerungseinheit enthält, die konfiguriert ist die Winkeldifferenz ($\Delta\theta$) zu der Zeit zu speichern, wenn die Übergangssteuerungsstartbedingung erfüllt ist, wobei die Winkeldifferenz ($\Delta\theta$) in einer Form einer Übergangssteuerstartwinkeldifferenz ($\Delta\theta$o) gespeichert ist und
der Wert, der auf die Winkeldifferenz ($\Delta\theta$) reagiert, eine Differenz zwischen einer vorliegenden Winkeldifferenz ($\Delta\theta$) und der Übergangssteuerstartwinkeldifferenz ($\Delta\theta$o) ist.

3. Fahrzeuglenksystem gemäß Anspruch 1 oder 2, wobei
die zweite Steuerungseinheit Lasten zu dem automatischen Übergangssteuerungslenkungsdrehmoment und dem Zielhilfsdrehmoment (Tm, mc) in Übereinstimmung mit einem Verhältnis zwischen dem zweiten vorgegebenen Wert und dem absoluten Wert des Wertes, der auf die Winkeldifferenz ($\Delta\theta$) reagiert, zuordnet, um das Zielmotordrehmoment (Tm) zu berechnen.

4. Fahrzeuglenksystem gemäß einem der Ansprüche 1 bis 3, wobei,
angenommen, dass $\Delta\theta x$ den Wert, der auf die Winkeldifferenz reagiert, kennzeichnet, Tm, aco das Übergangssteuerstartwinkelsteuerzieldrehmoment kennzeichnet, Trlc das Straßenlastdrehmoment, das durch den Abschätzer abgeschätzt ist, kennzeichnet, Tm, mc das Zielhilfsdrehmoment kennzeichnet, w (wo w > 0) den zweiten vorgegebenen Wert kennzeichnet und Tm das Zielmotordrehmoment für die Übergangssteuerung kennzeichnet, Tm durch die Gleichung (b) repräsentiert ist:

$$\text{Tm} = \{1 - (\,|\Delta\theta x|\,/\text{w})\}\cdot(\text{Tm, aco} - \text{Trlc}) + (\,|\Delta\theta x|\,/\text{w})\cdot\text{Tm, mc} \qquad \ldots \text{(b)}$$

5. Fahrzeuglenksystem gemäß einem der Ansprüche 1 bis 4, wobei
der automatische Lenkdeaktivator zusätzlich ein Übergangssteuerungsstopper enthält, der konfiguriert ist, wenn der absolute Wert des Werts, der auf die Winkeldifferenz ($\Delta\theta$) reagiert, kleiner als ein dritter vorgegebener Wert während der Übergangssteuerung ist, die Übergangssteuerung zu stoppen, um ein Schalten zu der automatischen Lenksteuerung zu machen, wobei der dritte vorgegebene Wert größer als Null ist.

6. Fahrzeuglenksystem gemäß einem der Ansprüche 1 bis 5, zusätzlich mit:

einem Hände-weg-Zustand-Detektor, der konfiguriert ist einen Hände-weg-Zustand zu erfassen, in welchem der Fahrer ein Lenkrad (2) des Fahrzeugs nicht greift;
einer Rückkehrsteuerungseinheit, die konfiguriert ist, wenn der Hände-weg-Zustand durch den Hände-weg-Zustand-Detektor während der Übergangssteuerung erfasst ist, eine Rückkehrsteuerung durchzuführen, um den elektrischen Motor (18) zu steuern, sodass der tatsächliche Lenkwinkel ($\theta$) den Ziellenkwinkel ($\Delta\theta$cmd) langsamer erreicht, als wenn die automatische Lenksteuerung durch die automatische Lenksteuerungseinheit ausgeübt ist.

**Revendications**

1. Système de direction de véhicule comprenant :

un moteur électrique (18) pour fournir une force de direction à un mécanisme de commande de direction (4) d'un véhicule ;
un dispositif de réglage (46) configuré pour régler un couple cible de commande d'angle (Tm, ac) pour amener une différence d'angle ($\Delta\theta$) entre un angle de direction cible ($\theta$cmd) et un angle de direction réel ($\theta$) à s'approcher de zéro ;
un estimateur (43) configuré pour estimer un couple de résistance à l'avancement sur route (Trlc) reçu d'une route par un objet devant être entraîné par le moteur électrique (18) ;
un dispositif de commande de direction automatique configuré pour régler un couple de direction automatique cible (Tm, ad) suivant le couple cible de commande d'angle (Tm, ac) réglé par le dispositif de réglage (46) et le couple de résistance à l'avancement sur route (Trlc) estimé par l'estimateur (43), et configuré pour commander le moteur électrique (18) suivant le couple de direction automatique cible (Tm, ac) de sorte à exercer une commande de direction automatique ;
un dispositif de commande de direction manuelle configuré pour commander le moteur électrique (18) suivant un couple d'assistance cible (Tm, mc) adaptée à un couple de direction (Td) de sorte à exercer une commande de direction manuelle ; et

un dispositif de désactivation de direction automatique configuré pour effectuer une commutation de la commande de direction automatique à la commande de direction manuelle suivant une opération de direction réalisée par un conducteur pendant la commande de direction automatique exercée par le dispositif de commande de direction automatique, dans lequel

le dispositif de désactivation de direction automatique comporte un dispositif de commande de transition configuré pour exercer une commande de transition lorsqu'une exigence de début de commande de transition est satisfaite, l'exigence de début de commande de transition comportant au moins une exigence selon laquelle une valeur absolue du couple de direction (Td) doit être égale ou supérieure à une première valeur prédéterminée, et **caractérisé en ce que**

le dispositif de commande de transition comporte

un premier dispositif de commande configuré pour, à un moment où l'exigence de début de commande de transition est satisfaite, sauvegarder le couple cible de commande d'angle (Tm, ac) réglé par le dispositif de réglage (46), le couple cible de commande d'angle (Tm, ac) étant sauvegardé sous la forme d'un couple cible de commande d'angle de début de commande de transition (Tm, aco),

un deuxième dispositif de commande configuré pour calculer un couple de direction automatique cible de commande de transition suivant le couple cible de commande d'angle de début de commande de transition (Tm, aco) et le couple de résistance à l'avancement sur route (Trlc) estimé par l'estimateur (43), configuré pour attribuer des pondérations au couple de direction automatique cible de commande de transition et au couple d'assistance cible (Tm, mc) en utilisant une valeur absolue d'une valeur adaptée à la différence d'angle ($\Delta\theta$) de sorte à calculer un couple de moteur cible (Tm), et configuré pour commander le moteur électrique (18) suivant le couple de moteur cible (Tm), dans lequel la valeur adaptée à la différence d'angle ($\Delta\theta$) est la différence d'angle ($\Delta\theta$) elle-même ou une différence entre une différence d'angle actuelle ($\Delta\theta$) et la différence d'angle de début de commande de transition ($\Delta\theta o$), et

un troisième dispositif de commande configuré pour, lorsque la valeur absolue de la valeur adaptée à la différence d'angle ($\Delta\theta$) est égale ou supérieure à une deuxième valeur prédéterminée, mettre fin à la commande de transition de sorte à effectuer une commutation de la commande de direction automatique à la commande de direction manuelle.

2. Système de direction de véhicule selon la revendication 1, dans lequel

le dispositif de commande de transition comporte en outre un quatrième dispositif de commande configuré pour sauvegarder la différence d'angle ($\Delta\theta$) au moment où l'exigence de début de commande de transition est satisfaite, la différence d'angle ($\Delta\theta$) étant sauvegardée sous la forme de la différence d'angle de début de commande de transition ($\Delta\theta o$), et

la valeur adaptée à la différence d'angle ($\Delta\theta$) est une différence entre une différence d'angle actuelle ($\Delta\theta$) et la différence d'angle de début de commande de transition ($\Delta\theta o$).

3. Système de direction de véhicule selon la revendication 1 ou 2, dans lequel

le deuxième dispositif de commande attribue des pondérations au couple de direction automatique cible de commande de transition et au couple d'assistance cible (Tm, mc) suivant un rapport entre la deuxième valeur prédéterminée et la valeur absolue de la valeur adaptée à la différence d'angle ($\Delta\theta$) de sorte à calculer le couple de moteur cible (Tm).

4. Système de direction de véhicule selon l'une quelconque des revendications 1 à 3, dans lequel

en supposant que $\Delta\theta x$ désigne la valeur adaptée à la différence d'angle, Tm, aco désigne le couple cible de commande d'angle de début de commande de transition, Trlc désigne le couple de résistance à l'avancement sur route estimé par l'estimateur, Tm, mc désigne le couple d'assistance cible, w (où w > 0) désigne la deuxième valeur prédéterminée, et Tm désigne le couple de moteur cible pour la commande de transition, Tm est représenté par Eq. (b) :

$$Tm = \{1 - (|\Delta\theta x|/w)\} \cdot (Tm, \ aco - Trlc) + (|\Delta\theta x|/w) \cdot Tm, \ mc \ ...(b)$$

5. Système de direction de véhicule selon l'une quelconque des revendications 1 à 4, dans lequel

le dispositif de désactivation de direction automatique comporte en outre un dispositif d'arrêt de commande de transition configuré pour, lorsque la valeur absolue de la valeur adaptée à la différence d'angle ($\Delta\theta$) est inférieure à une troisième valeur prédéterminée pendant la commande de transition, arrêter la commande de transition de sorte à effectuer une commutation vers la commande de direction automatique, la troisième valeur prédéterminée étant supérieure à zéro.

6. Système de direction de véhicule selon l'une quelconque des revendications 1 à 5, comprenant en outre :

un détecteur de condition de non-intervention configuré pour détecter une condition de non-intervention dans laquelle le conducteur ne tient pas un volant de direction (2) du véhicule ; et
un dispositif de commande de retour configuré pour, lorsque la condition de non-intervention est détectée par le détecteur de condition de non-intervention pendant la commande de transition, exercer une commande de retour pour commander le moteur électrique (18) de telle sorte que l'angle de direction réel ($\theta$) s'approche de l'angle de direction cible ($\Delta\theta$cmd) plus progressivement que lorsque la commande de direction automatique est exercée par le dispositif de commande de direction automatique.

*FIG. 1*

VEHICLE SPEED SENSOR 24

MOTOR CONTROL ECU 202

UPPER ECU 201

CCD CAMERA 25

GPS 26

RADAR 27

GEOGRAPHIC INFORMATION 28

MODE SWITCH 29

FIG. 2

# FIG.3

TARGET ASSIST TORQUE (Tm, mc)

VEHICLE
SPEED HIGH

⟨RIGHT⟩

0

⟨LEFT⟩
STEERING
TORQUE (Td)

VEHICLE
SPEED HIGH

*FIG.4*

EP 3 495 245 B1

# *FIG.5*

EP 3 495 245 B1

# FIG.6

# FIG. 8A

START

a

S1  NO  $|Td| \geq Tth$
AND
SIGN (Td) = SIGN ($\Delta\theta$)
AND
$|\Delta\theta| > \alpha$
?

YES

S2  SAVE Tm, ac AS Tm, aco
AND $\Delta\theta$ AS $\Delta\theta$o

b

S3

$\Delta\theta tc = \Delta\theta - \Delta\theta o$

$Tm = \left(1 - \dfrac{|\Delta\theta tc|}{w}\right) \cdot (Tm, aco - Trlc) + \dfrac{|\Delta\theta tc|}{w} \cdot Tm, mc$

S4  $|\Delta\theta| < \varepsilon \cdot |\Delta\theta o|$
OR
SIGN ($\Delta\theta$) $\neq$ SIGN ($\Delta\theta$o)
?

YES

S8  RETURN CONTROL MODE TO
AUTOMATIC STEERING MODE

NO

S5  HANDS OFF
?

YES  c

NO

S6  NO  $|\Delta\theta c| \geq w$
?

YES

S7  CHANGE CONTROL MODE
TO MANUAL STEERING MODE

END

# F I G . 8B

c

S9 | SAVE $\Delta\theta$ AS $\Delta\theta$hod
AND CURRENT TIME AS thod
START RETURN CONTROL

S10 | $\Delta\theta rc = \Delta\theta hod - \gamma \cdot SIGN(\Delta\theta) \cdot (t - thod)$
$\theta cmd, rc = \theta cmd + \Delta\theta rc$

S11 | HANDS OFF ? — NO

YES

S12 | $|\Delta\theta rc| < \delta$ ? — NO

S15 | STOP RETURN CONTROL

b

YES

S13 | STOP RETURN CONTROL

S14 | RETURN CONTROL MODE TO AUTOMATIC STEERING MODE

a

# FIG. 9

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2004256076 A
- WO 2016199839 A

- JP 2017114324 A